# EUROPEAN PATENT SPECIFICATION

(11) **EP 1 339 241 B1**
(45) Date of publication and mention of the grant of the patent: **16.11.2005**
(21) Application number: 02020672.8
(22) Date of filing: 13.09.2002
(51) Int. Cl.: H04Q 1/46

(54) **Dual hysteresis signal detection circuit**
Signalsdetektorschaltung mit doppelter Histerese
Circuit de détection de signal avec hysteresis double

(30) Priority: 21.02.2002 US 78662
(43) Date of publication of application: 27.08.2003
(73) Proprietor: WINBOND ELECTRONICS CORPORATION, Hsinchu (TW)
(72) Inventor: Chen, Mei-Wen, Fengshan City, Kaohsiung, Taiwan 830 (TW)
(74) Representative: Goddar, Heinz J.

(56) References cited:
- WO-A-96/25825
- US-A- 4 590 595
- US-B1- 6 269 160

## Description

### FIELD OF THE INVENTION

The present invention is related to a circuit for detecting dual hysteresis signals, and more particularly to the circuit for detecting a input signal duration with a upper hysteresis comparator and a lower hysteresis comparator.

### BACKGROUND OF THE INVENTION

In general, when the telephone with the spot dial function is used while the third people calls this telephone, the telephone company will send a multi-frequency signal to tell the user the spot dial coming. This is the so-called CAS (CPE (Customer Premise Equipment) Alerting Signal) tone. When the telephone circuit detects this signal, an acknowledged signal will send to the telephone company. The telephone company may send the telephone number of the third people and relative messages to the user telephone. The CAS tone comprises the multi-frequency signal of 2130HZ and 2750HZ. When the caller-ID circuit receives the CAS tone, both the signal frequency and the signal length will be detected. If the frequency and length of the signal meet the specification, the signal may be acknowledged as the signal sent from the telephone company. The Bellcore specification is listed in table 1.

The conventional detection circuit has the damping effect when the CAS tone having large power is received. The effect causes the CAS tone received is longer than the real CAS tone transmitted, so the CAS tone detection may be incorrect.

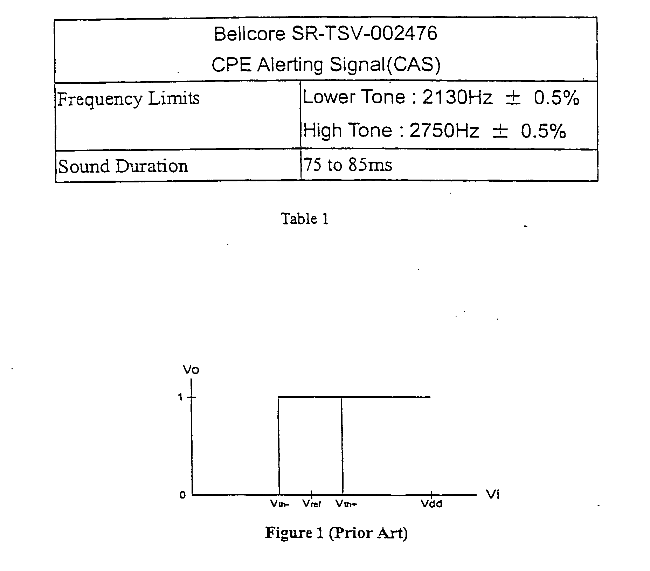

For instance of the CAS tone with high frequency 2750 HZ, when the 2750 HZ signal of the input signal is filtered through a band pass filter, the level of "1" or "0" will be decided by a comparator, and such a procedure is the so-called analog to digital conversion. The comparator output is dependent on the hysteresis. The principle is similar to the schmitt trigger. Fig. 1 shows the characteristic curve, wherein Vref is the reference voltage in the analog circuit and the voltage potential from Vth- to Vth+ is the hysteresis value. When the Vi is increased, if Vi > Vth+, Vo = "1", and when the Vi is decreased, if Vi < Vth-, Vo="0". The hysteresis value is according to the minimum value acceptable in the telecommunication specification. The signal will be sent to the detection circuit through the hysteresis comparator. The detection circuit is consist of counters used to detect the valid input signal according to the signal frequency. If the input signal is valid, the detection circuit outputs CAS_ALGO = "1", on the contrary the CAS_ALGO = "0".

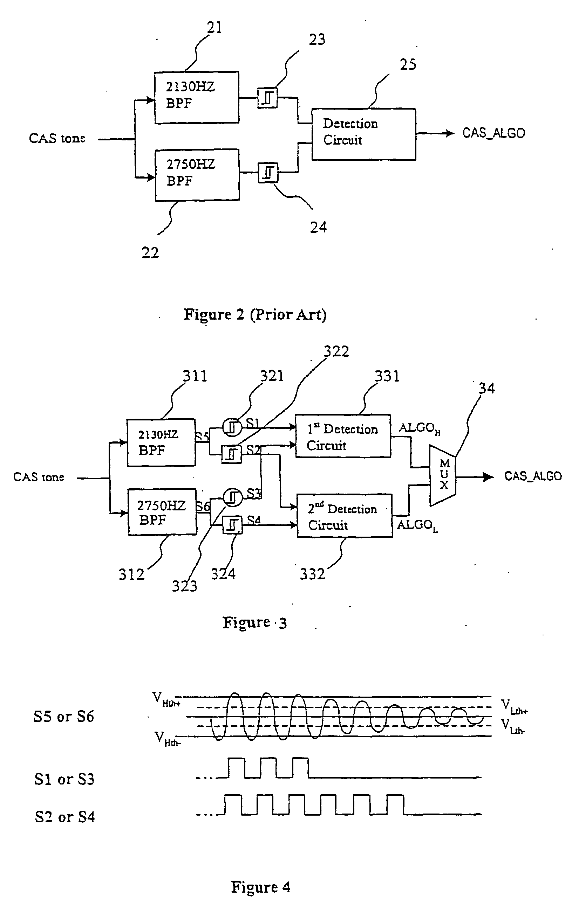

Fig. 2 Shows the conventional circuit. A short damping effect will appear in case of a large input signal through the band pass filter 21 or 22 after the input signal is ended, but this wrong input signal through the detection of hysteresis comparator 23 or 24 may be as a valid signal. Therefore, the valid signal detected will be longer than the real signal. The larger the signal strength is, the longer the time is taken. In speaking of the filter, the calculation time of the digital filter is longer than the analog filter, so the damping effect will more serious with digital filter.

"PCT patent (WO 96/25825) also disclosed method and structure for detecting a customer premises equipment alerting signal. In the disclosed structure, first and second bandpass filters connected to receive the detected one. The first bandpass filter passes a first analog signal at frequencies approximately equal to the first normal frequency such as 2130 Hz of a valid CAS tone. The second bandpass filter passes a second analog signal at frequencies approximately equal to the second normal frequency such as 2750 Hz of a valid CAS tone. First and second threshold limiter circuits generate first and second digital signals in response to the first and second analog signals. A microprocessor determines from the first and second digital signals whether the detected tone corresponds to a valid signal.

It is the object of the invention to provide a circuit for detecting dual is hysteresis signals which overcomes the problems mentioned above.

According to the invention this object is solved by the features of claim 1, sub claims refer to preferred embodiments.

The present invention may best be understood through the following description with reference to the accompanying drawings, in which:

### BRIEF DESCRIPTION OF THE DRAWINGS

Table 1 is a conventional Bellcore specification table;
Fig. 1 is a,conventional Vi-Vo curve of the hysteresis comparators;
Fig. 2 is a conventional CAS tone detection circuit block diagram;
Fig. 3 is the dual hysteresis comparators signal detection circuit block diagram according to the present invention;
Fig. 4 is the signal waveforms diagram for the input and the output of the dual hysteresis signal detection circuit filter.

### DETAILED DESCRIPTION OF THE PREFERRED EMBODIMENT

Please refer to Fig. 3 showing the dual hysteresis comparators signal detection circuit block diagram. In order to solve the problem caused by damping effect and not to impact the detection sensitivity, two hysteresis comparators (the first hysteresis comparator 321 and the third hysteresis comparator 323) are added to the original circuit having second hysteresis comparator 322, fourth hysteresis comparator 324 and detection circuit 332. Comparing to the conventional circuit, the hysteresis value of the first hysteresis comparator 321 and the third hysteresis comparator 323 is larger than the original. When the damping amplitude is lower than the larger hysteresis value, the signal of the first hysteresis comparator 321 and the third hysteresis comparator 323 will not change, and therefore the detection circuit will detect the CAS tone to be ended. Hereby, the CAS tone length (the duration time) detected will be near the actual length. Wherein, the first hysteresis comparator output is the first square wave signal S1, the second hysteresis comparator output is the second square wave signal S2, the third hysteresis comparator output is the third square wave signal S3, the fourth hysteresis comparator output is the four square wave signal S4, the 2130 HZ band pass filter 311 output is the signal S5 having the first frequency 2130 HZ, and the 2750 HZ band pass filter 312 output is the signal S6 having second frequency 2750 HZ.

Fig. 4 shows the relation between the band pass filter and the hysteresis comparators' output. In the conventional design, the output CAS_ALGO is outputted by the detection circuit 25 (refer to Fig. 2). In our new architecture, the CAS_ALGO is outputted by the multiplexor 34 that can select the first detection circuit 331 with output ALGO_{H} or the second detection circuit 332 with output ALGO_{L}. When the CAS tone is inputted, the second detection circuit 332 will detect the appearance of the CAS tone earlier than the first detection circuit 331. While when the CAS tone is ended the first detection circuit 331 will detect the disappearance of the CAS tone earlier than the second detection circuit 332. The relations of CAS_ALGO, ALGO_{H} and ALGO_{L} is described next.

Case1: The CAS tone amplitude is more than the upper hysteresis (V_{Hth+} to V_{Hth-}), so the first detection circuit 331 and the second detection circuit 332 will calculate out the ALGO_{H} and ALGO_{L} respectively. The beginning of CAS_ALGO is dominated by ALGO_{L} and the ending of CAS_ALGO is dominated by ALGO_{H}.

Case2: The CAS tone amplitude is between the upper hysteresis and the lower hysteresis (V_{Lth+} to V_{Lth-}). Because it is less than the upper hysteresis, the first hysteresis comparator 321 and the third hysteresis comparator 323 output no signal. The first detection circuit 331 is idle and ALGO_{H} is no signal. Certainly, the CAS_ALGO is dominated by ALGO_{L}.

Generally speaking, the larger the input signal amplitude is, the more obvious the damping effect caused by filter will be, and the more longer the damping time will be also. Anyway, the damping signal power will decreased more and more. By way of upper hysteresis, most of the damping signal will be cut off. Therefore, the signal detected will not be impacted by the damping effect, and it will not become longer, so the real. CAS tone will be acknowledged.

The advance of the present invention is to detect the CAS tone signal exactly. Dual hysteresis comparators is used, and the circuit design will be flexible, and eventually it is easy to meet the requirements. The circuit design will be easy to implement by way of adding some modules to the orignal circuit, while the CAS tone detection will be improved. In speaking to the signal required to detect the duration time (ex : DTMF), the dual hysteresis detection can improve the signal detection result with the least modification on the circuit.

While the invention has been described in terms of what are presently considered to be the most practical and preferred embodiments, it is to be understood that the invention need not be limited to the disclosed embodiment. On the contrary, it is intended to cover various modifications and similar arrangements included within the scope of the appended claims.

## Claims

1. A circuit for detecting the duration of a signal, comprising:
a first band pass filter (311) for inputting said signal and outputting said signal having a first frequency;
a first hysteresis comparator (321) electrically coupled to said first band pass filter (311) for comparing with said first frequency of said signal to output a first square wave signal (S1) according to a first high voltage and a first low voltage;
a first detection circuit (331) electrically coupled to said first hysteresis comparator (321) for detecting a part of said signal having said first frequency that is higher than said first high voltage and lower than said first lower voltage to output a first detection signal (ALGO_{H}) according to said first square wave signal (S1);
**characterized in** comprising:
a second hysteresis comparator (322) electrically coupled to said first band pass filter (311) for comparing with said first frequency of said signal to output a second square wave signal (S2) according to a second high voltage and a second low voltage, wherein said first high voltage is higher than said second high voltage and said first lower voltage is lower than said second lower voltage;
a second detection circuit (332) electrically coupled to said second hysteresis comparator (322) for detecting a part of said signal having said first frequency that is higher than said second high voltage and lower than said second lower voltage to output a second detection signal (ALGO_{L}) according to said second square wave signal (S2), said duration of said signal being detected according to said first detection signal (ALGO_{H}) and said second detections signal (ALGO_{L}); and
a multiplexor (34) electrically coupled to said first detection circuit (331) and said second detection circuit (332) for detecting said duration of said signal according to said first detection signal (ALGO_{H}) and said second detection signal (ALGO_{L}).

2. A circuit according to Claim 1 wherein said signal is a CAS tone.

3. A circuit according to Claim 1 wherein said first frequency is 2130Hz.

4. A circuit according to Claim 1 wherein said second square wave signal (S2) appears earlier than said first square wave signal (S1) according to said signal.

5. A circuit according to Claim 1 wherein said second square wave signal (S2) leads said first square wave signal (S1).

6. A circuit according to Claim 1 wherein said circuit further comprises:
a second band pass filter (312) for inputting said signal and outputting said signal having a second frequency;
a third hysteresis comparator (323) electrically coupled to said second band pass filter (312) for comparing with said second frequency of said signal to output a third square wave signal (S3) according to said first high voltage and said low voltage;
a fourth hysteresis comparator (324) electrically coupled to said second band pass filter (312) for comparing with said second frequency of said signal to output a second square wave signal (S4) according to said second high voltage and said second low voltage.

7. A circuit according to Claim 6 wherein said second frequency is 2750Hz.

## Patentansprüche

1. Ein Schaltkreis zum Messen der Dauer eines Signals, mit:
einem ersten Bandpassfilter (311) zum Eingeben des Signals und zum Ausgeben des Signals, das eine erste Frequenz hat,
einen ersten Hysteresecomparator (321), der elektrisch mit dem ersten Bandpassfilter (311) verbunden ist, zum Vergleichen mit der ersten Frequenz des Signals zum Ausgeben eines ersten Rechteckwellensignals (S1) entsprechend einer ersten hohen Spannung und einer ersten niedrigen Spannung;
einen ersten Detektionskreis (331), der elektrisch mit dem ersten Hysteresecomparator (321) verbunden ist, zum Erkennen des Teils des Signals mit der ersten Frequenz, der höher ist als die erste hohe Spannung und tiefer ist als die erste niedrige Spannung zum Ausgeben eines ersten Detektionssignals (ALGO_{H}) entsprechend dem ersten Rechteckwellensignal (S1);
**gekennzeichnet durch**
einen zweiten Hysteresecomparator (322), der elektrisch mit dem ersten Bandpassfilter (311) verbunden ist, zum Vergleichen mit der ersten Frequenz des Signals zum Ausgeben eines zweiten Rechteckwellensignals (S2) entsprechend einer zweiten hohen Spannung und einer zweiten niedrigen Spannung, wobei die erste hohe Spannung höher und die erste niedrige Spannung niedriger ist als die zweite niedrige Spannung;
einen zweiten Detektionskreis (332), der elektrisch mit dem zweiten Hysteresecomparator (321) verbunden ist, zum Erkennen des Teils des Signals mit der ersten Frequenz, der höher ist als die zweite hohe Spannung und niedriger ist als die zweite niedrige Spannung zum Ausgeben eines zweiten Detektionssignals (ALGO_{L}) entsprechend dem zweiten Rechteckwellensignal (S1), wobei die Dauer des Signals entsprechend dem ersten Detektionssignal (ALGO_{H}) und dem zweiten Detektionssignal (ALGO_{L}) gemessen wird; und
einen Multiplexer (34), der elektrisch mit dem ersten Detektionskreis (331) und dem zweiten Detektionskreis (332) gekoppelt ist, zum Messen der Dauer des Signals entsprechend dem ersten Detektionssignal (ALGO_{H}) und dem zweiten Detektionssignal (ALGO_{L}).

2. Ein Schaltkreis nach Anspruch 1, wobei das Signal ein CAS-Ton ist.

3. Ein Schaltkreis nach Anspruch 1, wobei die erste Frequenz 2130Hz beträgt.

4. Ein Schaltkreis nach Anspruch 1, wobei das zweite Rechtecksignal (S2) früher erscheint als das erste Rechtecksignal (S1) entsprechend dem Signal.

5. Ein Schaltkreis nach Anspruch 1, wobei das zweite Rechtecksignal (S2) dem ersten Rechtecksignal (S1) voreilt.

6. Ein Schaltkreis nach Anspruch 1, wobei die Schaltung weiter aufweist:
ein zweites Bandpassfilter (312) zum Eingeben des Signals und Ausgeben des Signals mit einer zweiten Frequenz;
einen dritten Hysteresecomparator (323), der elektrisch mit dem zweiten Bandpassfilter (312) verbunden ist, zum Vergleichen mit der zweiten Frequenz des Signals zum Ausgeben eines dritten Rechteckwellensignals (S3) entsprechend einer ersten hohen Spannung und einer ersten niedrigen Spannung,
einen vierten Hysteresecomparator (324), der elektrisch mit dem zweiten Bandpassfilter (312) verbunden ist, zum Vergleichen mit der zweiten Frequenz des Signals zum Ausgeben eines vierten Rechteckwellensignals (S4) entsprechend der zweiten hohen Spannung und der zweiten niedrigen Spannung.

7. Ein Schaltkreis nach Anspruch 6, wobei die zweite Frequenz 2750Hz beträgt.

## Revendications

1. Circuit destiné à détecter la durée d'un signal, comprenant :
un premier filtre passe-bande (311) destiné à entrer ledit signal et à délivrer ledit signal ayant une première fréquence ;
un premier comparateur d'hystérésis (321) couplé électriquement audit premier filtre passe-bande (311), destiné à comparer avec ladite première fréquence dudit signal afin de délivrer un premier signal d'onde carrée (S1) selon une première tension haute et une première tension basse ;
un premier circuit de détection (331) couplé électriquement audit premier comparateur d'hystérésis (321), destiné à détecter une partie dudit signal, ayant ladite première fréquence, qui est supérieure à ladite première tension haute et inférieure à ladite première tension basse, afin de délivrer un premier signal de détection (ALGO_{H}) selon ledit premier signal d'onde carrée (S1);
**caractérisé en ce qu'**il comprend :
un deuxième comparateur d'hystérésis (322) couplé électriquement audit premier filtre passe-bande (311), destiné à comparer avec ladite première fréquence dudit signal afin de délivrer un deuxième signal d'onde carrée (S2) selon une deuxième tension haute et une deuxième tension basse, dans lequel ladite première tension haute est supérieure à ladite deuxième tension haute et ladite première tension basse est inférieure à ladite deuxième tension basse ;
un deuxième circuit de détection (332) couplé électriquement audit deuxième comparateur d'hystérésis (322), destiné à détecter une partie dudit signal ayant ladite première fréquence qui est supérieure à ladite deuxième tension haute et inférieure à ladite deuxième tension basse, afin de délivrer un deuxième signal de détection (ALGO_{L}) selon le deuxième signal d'onde carrée (S2), ladite durée dudit signal étant détectée selon ledit premier signal de détection (ALGO_{H}) et ledit deuxième signal de détection (ALGO_{L}) ; et
un multiplexeur (34) couplé électriquement audit premier circuit de détection (331) et audit deuxième circuit de détection (332), destiné à détecter ladite durée dudit signal selon ledit premier signal de détection (ALGO_{H}) et ledit deuxième signal de détection (ALGO_{L}).

2. Circuit selon la revendication 1, dans lequel ledit signal est une tonalité CAS.

3. Circuit selon la revendication 1, dans lequel ladite première fréquence est 2130 Hz.

4. Circuit selon la revendication 1, dans lequel ledit deuxième signal d'onde carrée (S2) apparaît plus tôt que ledit premier signal d'onde carrée (S1) selon ledit signal.

5. Circuit selon la revendication 1, dans lequel ledit deuxième signal d'onde carrée (S2) précède ledit premier signal d'onde carrée (S1).

6. Circuit selon la revendication 1, dans lequel ledit circuit comprend en outre :
un deuxième filtre passe-bande (312) destiné à entrer ledit signal et à délivrer ledit signal ayant une deuxième fréquence ;
un troisième comparateur d'hystérésis (323) couplé électriquement audit deuxième filtre passe-bande (312), destiné à comparer avec ladite deuxième fréquence dudit signal afin de délivrer un troisième signal d'onde carrée (S3) selon lesdites premières tension haute et tension basse ;
un quatrième comparateur d'hystérésis (324) couplé électriquement audit deuxième filtre passe-bande (312), destiné à comparer avec ladite deuxième fréquence dudit signal afin de délivrer un quatrième signal d'onde carrée (S4) selon lesdites deuxièmes tension haute et tension basse.

7. Circuit selon la revendication 6, dans lequel ladite deuxième fréquence est 2750 Hz.
